# EUROPEAN PATENT APPLICATION

(11) **EP 4 489 451 A1**
(43) Date of publication of application: **08.01.2025**
(21) Application number: 23781159.1
(22) Date of filing: 08.02.2023
(51) Int. Cl.: H04W 4/80, H04W 4/06, G08B 3/10, G08B 5/22

(54) **ELECTRONIC DEVICE AND METHOD FOR PROVIDING ULTRA WIDE BAND COMMUNICATION**

(30) Priority: 30.03.2022 KR 20220039516
(71) Applicant: Samsung Electronics Co., Ltd, Suwon-si, Gyeonggi-do 16677 (KR)
(72) Inventor: JUNG, Dawoon, Suwon-si, Gyeonggi-do 16677 (KR); KANG, Hyejin, Suwon-si, Gyeonggi-do 16677 (KR); KIM, Heesu, Suwon-si, Gyeonggi-do 16677 (KR); CHOI, Jihye, Suwon-si, Gyeonggi-do 16677 (KR); HAN, Kwanghoon, Suwon-si, Gyeonggi-do 16677 (KR)
(74) Representative: Appleyard Lees IP LLP
(86) International application number: PCT/KR2023/001846
(87) International publication number: WO 2023/191299

(57) **Abstract**

The present document relates to a method and device for UWB communication, and the electronic device comprises a communication module, a memory, and at least one processor electrically connected to the communication module and the memory, wherein the at least one processor is configured to control the communication module to broadcast a ranging request message including an address selected from among a plurality of addresses configured in a specified broadcast address pool, by using short-range wireless communication, and receive a ranging response message from at least one external electronic device to which the selected address is allocated by using the designated broadcast address pool, wherein the address allocated to the at least one external electronic device may correspond to the address included in the ranging request message. Other embodiments may also be possible.

## Description

### [Technical Field]

The disclosure relates to ultra wideband (UWB) communication and, more particularly, to an electronic device and a method for operating an address of an electronic device.

### [Background Art]

Recently, electronic devices have been developed in various forms for convenience of users and provide a variety of services or functions.

As various services can be provided according to the development of wireless communication systems, a method of effectively providing the services is needed. For example, a ranging technology for measuring the distance between electronic devices using an ultra-wideband (UWB) may be used.

### [Detailed Description of the Invention]

### [Technical Problem]

An anonymous distance-based service may be provided by a ranging technology for measuring the distance between electronic devices through UWB communication. Since the anonymous distance-based service is not paired in advance, it may be difficult to detect in advance an address of a counterpart to be measured. Further, the anonymous distance-based service needs a measurement cycle in units of msec and thus cannot consume much time to detect the address and have difficulty in identifying the address of the counterpart within a short time.

The disclosure provides an electronic device and a method for rapidly finding a new target in order to provide a real-time service to an anonymous target through UWB communication and avoiding collision due to simultaneous transmission from an unspecified number of anonymous responders and providing the efficient use when a ranging operation using broadcast address is performed.

### [Technical Solution]

According to an embodiment of the disclosure, an electronic device includes a communication module, memory, and at least one processor electrically connected to the communication module and the memory, wherein the at least one processor is configured to control the communication module to broadcast a ranging request message comprising an address selected from a plurality of addresses configured in a specified broadcast address pool through short-range wireless communication and receive a ranging response message from at least one external electronic device to which an address selected using the specified broadcast address pool is allocated, and wherein the address allocated to the at least one external electronic device correspond to the address included in the ranging request message.

According to an embodiment, a method of operating an electronic device includes broadcasting a ranging request message comprising an address selected from a plurality of addresses configured in a specified broadcast address pool through a communication module of the electronic device using short-range wireless communication and receiving a ranging response message from at least one external electronic device to which an address selected using the specified broadcast address pool is allocated, wherein the address allocated to the at least one external electronic device correspond to the address included in the ranging request message.

### [Advantageous Effects]

According to an embodiment, it is possible to rapidly find a new target by providing a real-time service to an anonymous target through UWB communication, avoid collision due to simultaneous transmission from an unspecified number of anonymous responders and provide the efficient use when a ranging operation using broadcast address is performed, and guarantee equal measurement opportunities to all of service participants. In addition, various effects directly or indirectly detected through the disclosure can be provided.

### [Brief Description of Drawings]

FIG. 1 is a block diagram of an electronic device within a network environment according to various embodiments.
FIGs. 2A and 2B illustrate examples of a configuration of an electronic device for UWB communication according to an embodiment.
FIG. 3 illustrates an example of a configuration of an electronic device for UWB communication according to an embodiment.
FIG. 4 illustrates an example of a method of operating an electronic device according to an embodiment.
FIG. 5 is a flowchart illustrating a method of operating an electronic device and an external electronic device according to an embodiment.
FIG. 6 illustrates an example of a ranging operation of an electronic device and an external electronic device according to an embodiment.
FIGs. 7A, 7B, and 7C illustrate examples of a ranging operation of an electronic device and an external electronic device according to an embodiment.
FIG. 8 illustrates an example of a ranging operation of an electronic device and an external electronic device according to an embodiment.
FIG. 9 illustrates an example of a ranging operation of an electronic device and an external electronic device according to an embodiment.

In connection with description of drawings, the same or similar reference numerals may be used for the same or similar elements.

### [Mode for Carrying out the Invention]

Hereinafter, an electronic device according to various embodiments is described with reference to the accompanying drawings. The term user used in various embodiments may be a person using an electronic device or a device (for example, an artificial intelligence electronic device) using an electronic device.

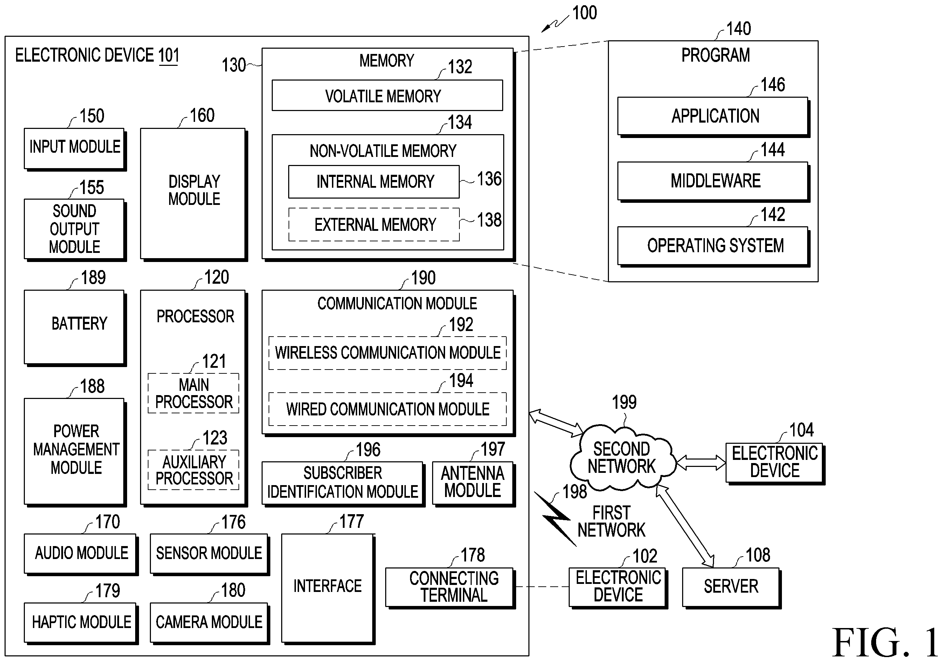

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

A wireless sensor network technology is largely divided into a wireless local area network (WLAN) technology and a wireless personal area network (WPAN) technology according to the recognized distance. At this time, the WLAN corresponds to a technology based on IEEE 802.11 capable of accessing a backbone network within a radius of 100 m. Further, the WPAN corresponds to a technology based on IEEE 802.15 and may include Bluetooth, ZigBee, ultra-wideband (UWB), and the like. A wireless network for implementing the wireless network technologies may include a plurality of electronic devices.

Hereinafter, embodiments of the disclosure are described in detail along with the accompanying drawings. The embodiments of the disclosure are described as examples of communication systems using the UWB, but may also be applied to other communication systems having similar technical backgrounds or characteristics. Accordingly, embodiment of the disclosure may also be applied to other communication systems through some modifications without departing from the scope of the disclosure on the basis of determination of those skilled in the art. The UWB may be a band itself to which UWB communication is applied. The UWB allows secure and accurate ranging between devices. Accordingly, the UWB allows relatively location estimation based on the distance between two devices or accurate location estimation of a device based on the distance from stationary devices of which the locations are known.

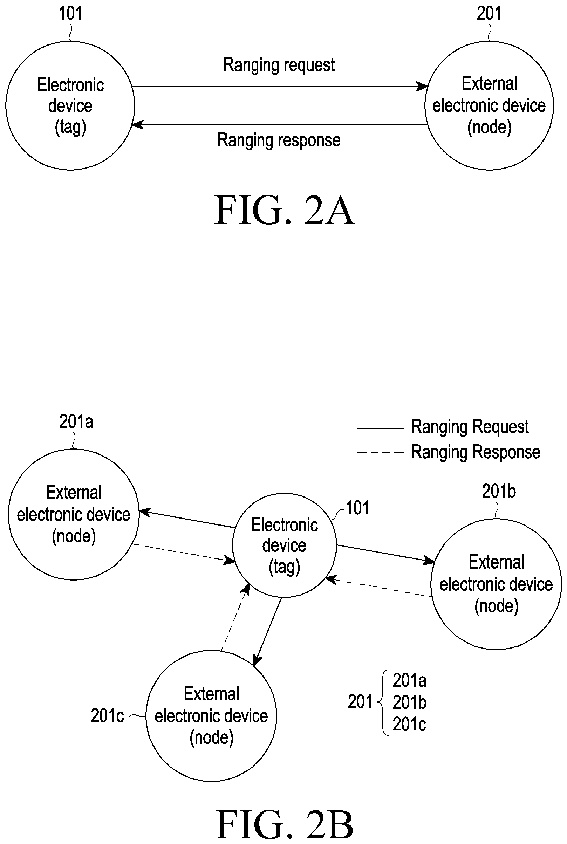

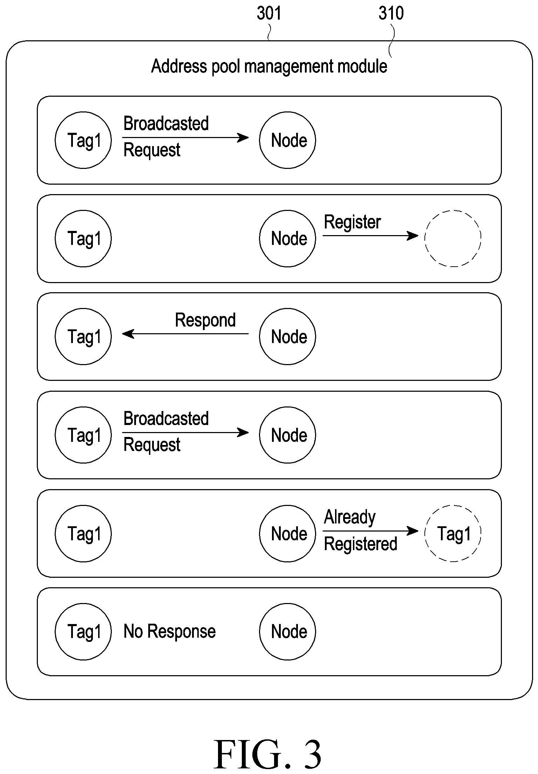

FIG. 2 is a diagram illustrating an environment for identifying a location of an external electronic device by an electronic device according to an embodiment, and FIG. 3 is a diagram illustrating an example of a configuration of an electronic device for UWB communication according to an embodiment.

Referring to FIGs. 1, 2A, and 2B, an electronic device 101 (for example, the electronic device 101 of FIG. 1) according to an embodiment may perform UWB ranging with an unspecified number of ranging devices through UWB communication in a ranging area network (RAN). The electronic device 101 is a ranging device (for example, tag) using UWB communication and may be referred to as a requester making a request for ranging to an unspecified number of devices. The unspecified number of devices is a plurality of external electronic devices (for example, nodes) which responds to the ranging and may be referred to as responders. The UWB may be a wireless communication technology using a bandwidth higher than or equal to 500 MHz or bandwidths corresponding to the center frequency that are 20% or more. The UWB may use an anonymous direct broadcast satellite (DBS) forward (FW) scheme and cannot know in advance an address of a counterpart of which the location is to be measured since pairing is not performed in advance. In the anonymous DBS FW scheme of the UWB, service pairing is spontaneous unplanned, relationships are many to many, and a ranging cycle unit is msec.

Referring to FIG. 3, the electronic device 101 according to an embodiment may implement a software module 301 (for example, the program 140 of FIG. 1) for executing a service using UWB communication. The memory 130 of the electronic device 101 may store instructions to implement the software module. At least one processor 120 may execute the instructions stored in the memory 130 in order to implement the software module 301 and control hardware (for example, the display module 160, the audio module 170, and/or the communication module 190 of FIG. 1) associated with the function of the software module 301.

The software module 301 of the electronic device 101 according to an embodiment may include a kernel (or HAL), a framework (for example, the middleware 144 of FIG. 1), and an application (for example, the application 146 of FIG. 1). At least a portion of the software module 301 may be preloaded to the electronic device 101 or can be downloaded from a server (for example, the server 108). The kernel may include, for example, a wireless communication module (for example, a UWB chipset) and a power module. The kernel may include, for example, a system resource manager or a device driver capable of controlling, allocating, or retrieving resources, but is not limited thereto and may further include other modules. The framework may include, for example, a wireless communication service module (for example, a UWB service) and a power controller module (power controller), but is not limited thereto and may further include other modules. The framework may provide a function that applications need in common or provide various functions to applications through an application programming interface (not shown) so that the application can efficiently use limited system resources within the electronic device 101. The wireless communication service module may manage, for example, a wireless connection of a wireless communication scheme (for example, UWB) and may include an address pool management module 310 for configuring and managing a broadcast address pool. The power control module may manage a battery or power and provide power information required for the operation of the electronic device. The framework may include a module configured to make a combination of various functions of the above-described elements. The framework may provide a specified for each type of the operating system in order to provide a differentiated function. The framework may dynamically delete the existing elements or add new elements.

According to an embodiment, the application may include an application (for example, a module, a manager, or a program) related to ranging of UWB communication. For example, the application may include a broadcast address pool management application, an application for monitoring ranging failure, and an application for measuring the relative distance. The application 230 may further include a module (or application) for wireless communication with another electronic device (for example, the electronic device 102 or 104 of FIG. 1 or the server 108). The application may include an application received from another electronic device (for example, the server 108 or the electronic device 102 or 104). According to an embodiment, the applications may include a preloaded application or a third-party application that can be downloaded from the server. The illustrated elements of the software module 201 according to an embodiment and names of the elements may vary depending on the type of the operating system. According to an embodiment, at least a portion of the software module may be implemented by software, firmware, hardware, or a combination of two or more thereof. At least a portion of the software module 201 may be implemented (for example, executed) by, for example, a processor (for example, AP). At least a portion of the software module 201 may include, for example, a module, a program, a routine, a set of instructions, or a process for performing at least one function.

Referring to FIGs. 1, 2A, 2B, and 3, the electronic device 101 according to an embodiment may include at least one processor 120, the memory 130, the display module 160, the audio module 170, and the communication module 190. The electronic device 101 is not limited thereto and may further include other elements to perform operations according to various embodiments.

The processor 120 of the electronic device 101 according to an embodiment may be electrically connected to the memory 130, the display module 160, the audio module 170, and the communication module 190 and may perform overall control to execute operations according to various embodiments. The processor 120 may control the overall operation of the electronic device 201.

According to an embodiment, the processor 120 may control the communication module 190 to perform UWB ranging with at least one external electronic device 201 through the UWB. The processor 120 may measure the relative distance between the electronic device 101 that is a ranging requester and at least one external electronic device 201 that is a ranging responder in real time by exchanging a message (for example, packet) for performing UWB ranging, identify a dangerous situation by determining a degree of risk according to the measured distance, and control the display module 160 to display information for informing of the dangerous situation. The processor 120 may control the audio module 170 to output the information for informing of the dangerous situation.

According to an embodiment, the processor 120 may make a request for ranging according to an address type for transmission of a ranging request message by the electronic device 101. For example, the address type may be an arranged fixed address (node address) type or a broadcast type.

According to an embodiment, as illustrated in FIG. 2A, the processor 120 may perform a ranging process operation, based on an identified service (for example, identified service). The processor 120 may transmit a ranging request message for a ranging request from the electronic device 101 which is a requester to the external electronic device 201 that is a responder, based on the arranged fixed address type. The ranging request message may include a specific responder address. The processor 120 may receive a ranging response message in response to the ranging request from the external electronic device 201. The ranging response message may include a requester address corresponding to the specific responder address.

According to an embodiment, as illustrated in FIG. 2B, the processor 120 may perform a ranging process operation, based on a service (for example, anonymous service) making a request for ranging to an unspecified number of people. The processor 120 may broadcast the ranging request message for the ranging request from the electronic device 101 that is the requester to an unspecified number of external electronic devices 201, based on a broadcast type. The ranging request message may include an address (for example, broadcast address) for broadcast selected from among a plurality of configured addresses. The processor 120 may receive a ranging response message in response to the ranging request from an unspecified number of external electronic devices 201: 201a, 201b, ..., 201n (any node) receiving the ranging request message. The ranging response message may include an address corresponding to the broadcast address.

According to an embodiment, when transmitting the ranging request to an unspecified number of external electronic devices 201 as illustrated in FIG. 2B, the processor 120 may rapidly find an unspecified number of anonymous targets within a short time to satisfy requirements of the real time service, perform uniform measurement, and perform a designated ranging process operation to prevent collision due to simultaneous responses of the unspecified number of external electronic devices 201. The processor 120may receive a ranging response message that the responder selectively (or probabilistically) transmits in response to the broadcast ranging request message. The processor 120 may designate a broadcast pool that manages N addresses to prevent response collision. The processor 120 may perform group broadcast using the designated broadcast pool. The processor 120 may dynamically select and respond to an address to allow the responder to respond only to a specific address among the N addresses in the broadcast address pool, and may dynamically refresh the address. For example, the responder may select an address with a seed of a unique device value (e.g., MAC address) or select a random value to select an address from the broadcast address pool. For example, the responder may minimize collision by periodically updating addresses. An address life time may be configured as a fixed time, an adaptation time by measurement, or an adaptation time by feedback. For example, the responder may minimize collision by reselecting an address according to an aperiodic event (for example, collision rate). The address may be updated based on network parameter measurement or a requester's feedback.

According to an embodiment, the processor 120 may include an address pool management module (for example, a software module executed in the application 146 of the memory 130 of FIG. 1) to use the broadcast address pool. The processor 120 may select a single specific address (broadcast address) (for example, a first address) among N addresses configured in the broadcast address pool by the address pool management module and broadcast a ranging request message including the selected address. When receiving the ranging request message, the responder may selectively make a response to the ranging request message. When there is no history of receiving an address included in the ranging request message, the responder may register an address and transmit a ranging response message. When there is a history of receiving the address included in the ranging request message, the responder may not transmit the ranging response message. The processor 120 may receive a ranging response message that the responder transmitted, analyze information included in the ranging response message to make pairing with the responder, and measure the distance between the electronic device 101 and the responder (for example, the external electronic device 201).

According to an embodiment, the processor 120 may configure two or more addresses (for example, first to fifth addresses 0x01, 0x02, 0x03, 0x04, and 0x05) among N addresses included in the broadcast address pool as one broadcast group through a group broadcast operation scheme and sequentially broadcast two or more ranging request messages including two or more addresses at a designated broadcast time point through time sharing in a transmission time (for example, ranging round). The responder may dynamically determine an address according to a specified reference (for example, a reference based on network information when joining or non-used address allocation) among the N addresses included in the broadcast address pool through the group broadcast operation scheme.

According to an embodiment, the processor 120 may monitor ranging failure by response collision due to overlapping address allocation to identify a ranging failure rate and transmit information on the identified ranging failure rate to the external electronic device 201. The external electronic device 201 may monitor its own ranging failure to identify a ranging failure rate, identify whether the ranging failure rate is higher than or equal to a threshold value, based on the information on the ranging failure rate received from another external electronic device or the electronic device 101, acquire a network parameter through network monitoring when the ranging failure rate is higher than or equal to the threshold value, and reallocate address to minimize overlapping.

According to various embodiments, the memory 130 may store information related to the operation of the electronic device 201 and the ranging request message and the ranging response message according to the ranging operation. The memory 130 may store the designated broadcast address pool, information related to the ranging failure rate, distance measurement result information, and information related to dangerous situations. In addition, the memory may include information required for performing the ranging operation procedure and information required for distance measurement.

According to various embodiments, the display module 160 may display information related to dangerous situations identified based on the ranging response message on a display according to the control of the processor 210.

According to various embodiments, the audio module 230 may output information related to dangerous situations identified based on the ranging response message through a speaker according to the control of the processor 210.

According to various embodiments, the communication module 190 may be configured to perform UWB communication between the electronic device 101 and the external electronic device 201. The communication module 190 may transmit a ranging request message to an unspecified number of external electronic devices 201 through the ranging operation using UWB communication and receive a ranging response message from at least one external electronic device 210 receiving the ranging request message.

According to an embodiment, a requester starting the ranging may be changed according to conditions of the electronic device 101 and the external electronic device 201 that perform UWB communication. When the external electronic device 201 starts the ranging request, the electronic device 101 may operate as a node device that is a responder. The electronic device 101 may allocate address selected from the addresses included in the group by using the broadcast address pool. The ranging request message broadcasted from the external electronic device 201 may be received and a ranging response message including an allocated address corresponding to the address included in the received ranging request message may be transmitted to the external electronic device 201. The electronic device 101 may monitor ranging failure by response collision due to overlapping address allocation to identify a ranging failure rate, acquire a network parameter through network monitoring when the identified ranging failure rate is higher than or equal to a threshold value, and reallocate address to minimize overlapping. Information related to address reallocation may be transmitted to the external electronic device 201.

Main elements of the electronic device have been described in an embodiment through the electronic device 101 of FIGs. 1, 2A, and 2B. However, not all of the elements illustrated in FIGs. 1, 2A, and 2B are necessary in various embodiments, and the electronic device 101 may be implemented by more or fewer elements than those illustrated therein. Further, locations of the main elements of the electronic device 101 described through FIGs. 1, 2A, and 2B can be changed according to various embodiments.

According to an embodiment, an electronic device (for example, the electronic device 101 of FIGs. 1, 2A, and 2B) may include a communication (for example, the communication module 190 of FIG. 1), memory (for example, the memory 130 of FIG. 1), and at least one processor (for example, the processor 120 of FIG. 1) electrically connected to the communication module and the memory, wherein the at least one processor may be configured to control the communication module to a broadcast ranging request message comprising an address selected from a plurality of addresses configured in a specified broadcast address pool through short-range wireless communication, and receive a ranging response message from at least one external electronic device to which an address selected using the specified broadcast address pool is allocated, and wherein the address allocated to the at least one external electronic device may correspond to the address included in the ranging request message.

According to an embodiment, the at least one processor may be configured to measure distance between the electronic device and the at least one external electronic device, based on the ranging response message, identify degree of risk by the at least one external electronic device, based on the measured distance, and inform of dangerous situation, based on the identified degree of risk.

The electronic device may further include a display module electrically connected to the at least one processor, and the at least one processor may be configured to control the display module to display information for informing of dangerous situation, based on the identified degree of risk.

According to an embodiment, the electronic device may further include an audio module electrically connected to the at least one processor, and the at least one processor may be configured to control the audio module to output information for informing of dangerous situation, based on the identified degree of risk.

According to an embodiment, the at least one processor may be configured to periodically broadcast the ranging request message in a specified transmission time.

According to an embodiment, the short-range wireless communication may be an ultra-wi deb and.

According to an embodiment, the at least one processor may be configured to set a broadcast group comprising two or more addresses among the plurality of addresses included in the broadcast address pool and sequentially broadcast two or more request messages comprising address sequentially selected from the two or more addresses included in the broadcast group at specified broadcast time point in the transmission time.

According to an embodiment, the at least one processor may be configured to, in case that the address included in the ranging request message has a history of previous reception by the at least one external electronic device, identify that the ranging response message is not received from the at least one external electronic device in a next transmission time.

According to an embodiment, the at least one processor may be configured to, in case that the at least one external electronic device reallocates the address periodically or according to event generation, receive information related to address reallocation from the at least one external electronic device.

According to an embodiment, the at least one processor may be configured to, in case that the electronic device receiving a ranging request message from the at least one external electronic device is a responder, allocate an address selected using the broadcast address pool, identify ranging failure rate of a ranging response message transmitted to the at least one external electronic device in response to the ranging request message, in case that the identified ranging failure rate is higher than or equal to a threshold value, reallocate another address by using the broadcast address pool, and receive information related to address reallocation according to ranging failure rate identified by other anonymous external electronic device located in an adjacent area from the other external electronic devices.

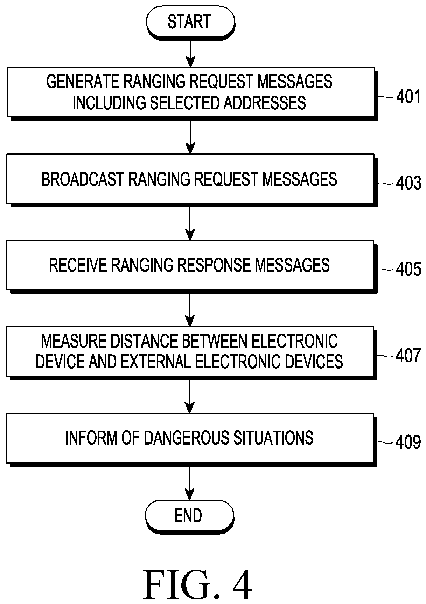

FIG. 4 illustrates an example of a method of operating an electronic device according to an embodiment.

Referring to FIG. 4, an electronic device (for example, the electronic device 101 of FIG. 1 and FIG. 2) according to an embodiment may select an address to be broadcasted from among addresses configured in a specified broadcast address pool at a periodically designated transmission time (for example, ranging round) or when an event by a request is generated, and may generate a ranging request message including the selected address in operation 401.

In operation 403, the ranging request message including the selected address may be broadcasted using a short-range wireless communication scheme (for example, UWB). The ranging request message may be broadcasted to an unspecified number of external electronic devices at a broadcast time point of the transmission time. According to an embodiment, the electronic device may select one address from among a plurality of addresses configured in the broadcast address pool. According to another embodiment, when the electronic device uses the broadcast address pool through a group broadcast operation method, the electronic device may sequentially or randomly select two or more addresses (for example, first to fifth addresses (0x01, 0x02, 0x03, 0x04, and 0x05)) configured in a group table of a broadcast group included in the broadcast address pool. The electronic device may sequentially broadcast a plurality of ranging request messages broadcast time points of the transmission time through time sharing.

In operation 405, the electronic device may receive a ranging response message from at least one external electronic device among the unspecified number of external electronic devices receiving the ranging request message. According to an embodiment, the electronic device may receive no ranging response message from at least one external electronic device having a history of receiving the selected address. The electronic device may receive a response message from at least one external electronic device having no history of receiving the selected address. The electronic device may receive a ranging response message including result information of update or reallocation of the broadcast address periodically transmitted by the external electronic device or event generation or another message from the external electronic device.

In operation 407, the electronic device may measure the distance between at least one external electronic device and the electronic device. The electronic device may measure the distance between at least one external electronic device and the electronic device by using the address included in the ranging response message and information (for example, identified information) related to the external electronic device.

In operation 409, a degree of risk may be identified based on the measured distance and a dangerous situation may be known based on the identified degree of risk. When the measured distance is shorter than a threshold value, the electronic device may identify that the degree of risk corresponds to a dangerous situation, and display information indicating the dangerous situation on a display (for example, the display of the display module 160 of FIG. 1) or output the information through an audio module (for example, the audio module 170 of FIG. 1).

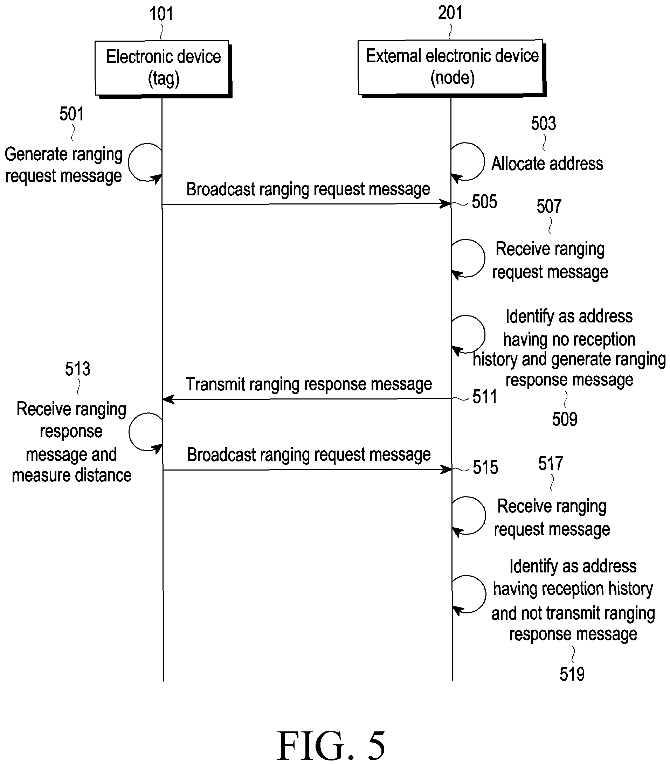

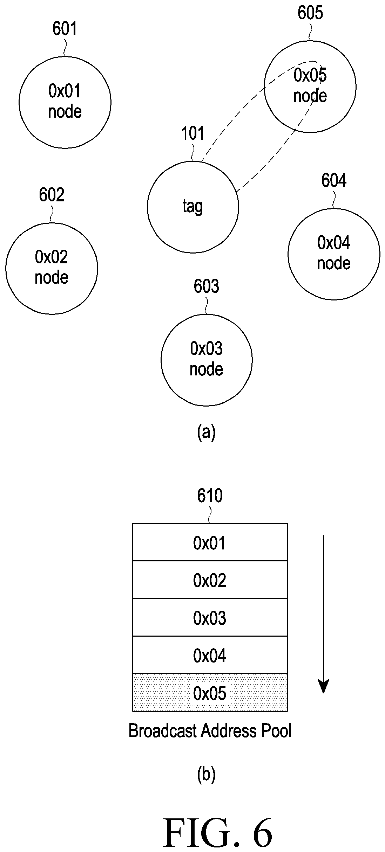

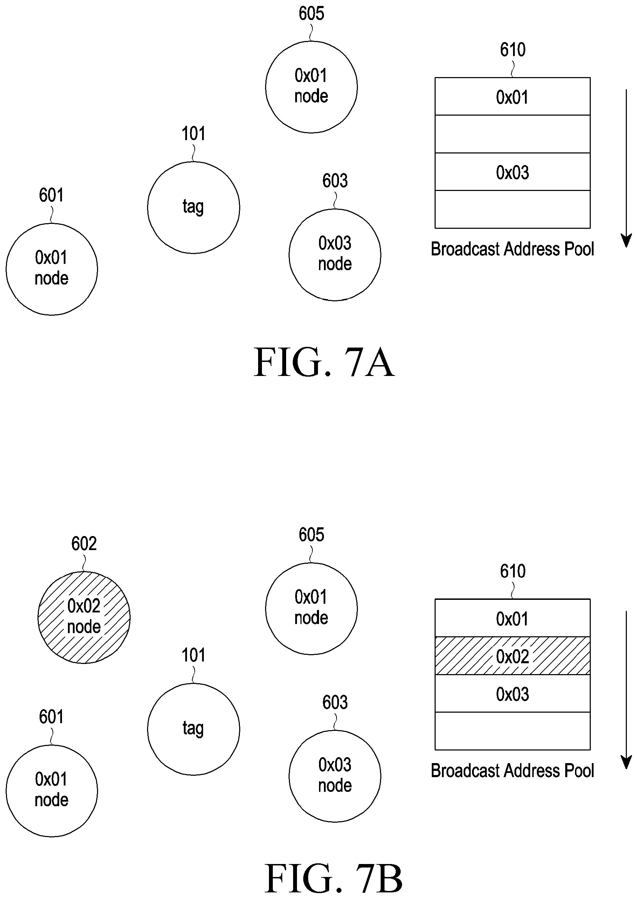

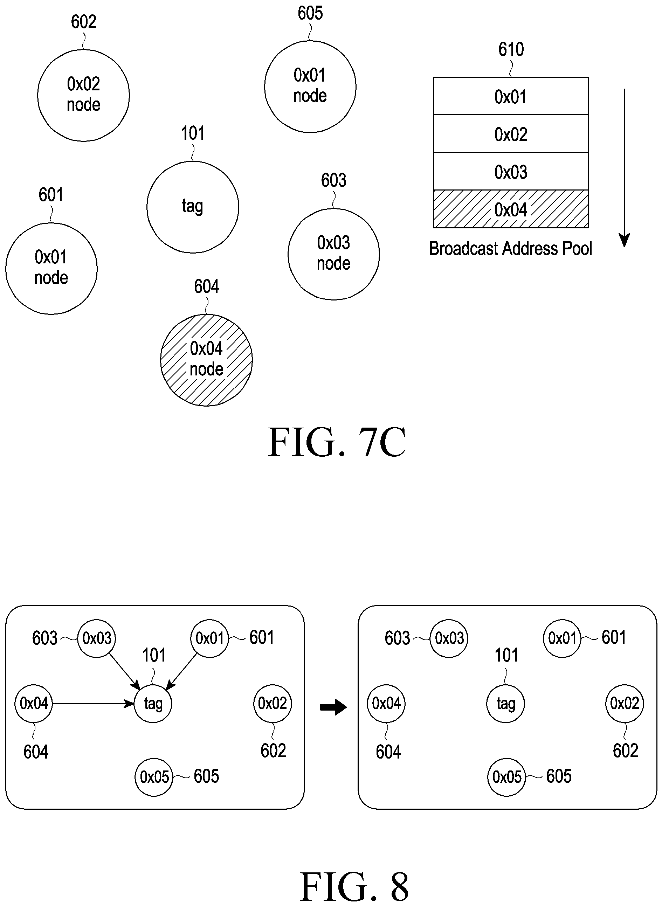

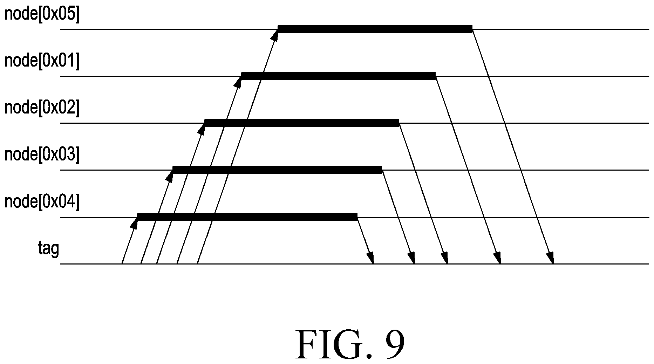

FIG. 5 is a flowchart illustrating a method of operating an electronic device and an external electronic device according to an embodiment, FIG. 6 illustrates an example of a ranging operation of an electronic device and an external electronic device according to an embodiment, FIGs. 7A, 7B, and 7C illustrate examples of a ranging operation of an electronic device and an external electronic device according to an embodiment, and FIGs. 8 and 9 illustrate examples of a ranging operation of an electronic device and an external electronic device according to an embodiment.

Referring to FIG. 5, an electronic device (for example, the electronic device 101 of FIGs. 1, 2A, and 2B) (for example, tag 1) according to an embodiment may generate a ranging request message including an address (for example, a first address) selected from among addresses configured in a specified broadcast address pool at a broadcast time point of a first transmission time (for example, ranging round) designated periodically or by a request in operation 501. In operation 503, the electronic device 101 may perform broadcasting by using a short-range wireless communication scheme (for example, UWB). The ranging request message may be broadcasted to an unspecified number of external electronic devices at a periodically designated transmission time (for example, ranging round). According to an embodiment, the electronic device may select one address from among a plurality of addresses configured in the broadcast address pool. According to another embodiment, when the electronic device 101 uses the broadcast address pool through a group broadcast operation scheme, the electronic device 101 may select a plurality of addresses (for example, first to fifth addresses 0x01, 0x02, 0x03, 0x04, and 0x05) as illustrated in FIG. 6 and generate a plurality of ranging request messages sequentially including the plurality of addresses in the order of specified allocation.

In operation 503, the external electronic device 201, that is, a plurality of external electronic devices 601, 602, 603, 604, and 605 (for example, the external electronic device 201 of FIG. 4) located around the electronic device 101 may dynamically select address by using the broadcast address pool as illustrated in FIGs. 7A to 7C. When using the broadcast address pool through the group broadcast operation scheme, the external electronic device 201 may select one of a plurality of addresses (for example, first to fifth addresses (0x01, 0x02, 0x03, 0x04, and 0x05)) configured in the group table from among the address and allocate the selected address (for example, 0x01) as illustrated in FIGs. 7A to 7C.

In operation 507, the electronic device 101 may sequentially broadcast a plurality of ranging request message at a specified broadcast time point through time sharing in a transmission time (for example, ranging round). For example, the electronic device 101 (for example, tag) may select a first address (0x01) at a first broadcast time point, transmit a ranging request message including the selected first address, select a second address (0x01) at a second broadcast time point, transmit a ranging request message including the selected first address, sequentially select address up to a fifth address (0x03, 0x04, and 0x05) included in the group table 610, and sequentially transmit a broadcast ranging request message including the selected address to an unspecified number of anonymous external electronic devices.

In operation 507, the external electronic device 201 (for example, node) may receive the ranging request message broadcasted by the electronic device 101. The external electronic device 201 may receive the ranging request message including the selected address. In order to prevent ranging failure due to overlapping allocation, each of the plurality of external electronic devices 601, 602, 603, 604, and 605 may monitor its own ranging failure rate or failure rates of neighboring electronic devices and, when the ranging failure rate is higher than or equal to a threshold value, reallocate address to minimize overlapping as illustrated in FIG. 8. As illustrated in FIG. 8, when the external electronic devices 601, 602, 603, 604, and 605 overlappingly allocating the same address (for example, the first address (0x01)) transmit a ranging response message to the electronic device 101, collision due to simultaneous ranging responses may occur and thus a ranging failure rate may be generated. In order to minimize overlapping, the external electronic devices 601, 602, 603, 604, and 605 may acquire network parameters through network monitoring, monitor their own ranging failure rate, monitor ranging failure rate of neighboring external electronic devices, and reallocate address, based on the network parameters and information related to the acquired ranging failure rates. Accordingly, as illustrated in FIG. 9, the electronic device 101 (for example, tag) may receive a ranging response message from the external electronic devices 601, 602, 603, 604, and 605 at specified time intervals as the external electronic devices 601, 602, 603, 604, and 605 reallocate the address (for example, 0x01, 0x02, 0x03, 0x04, and 0x05)). Accordingly, the electronic device 101 may avoid collision due to the ranging responses.

In operation 509, the external electronic device 201 may check whether the address included in the ranging request message is an address having a history of being received at a previous transmission time and identify that the address included in the ranging request message is an initially received address having no history of previous reception. The external electronic device 201 may generate a ranging response message in response to the ranging request message. The ranging response message may include an address corresponding to the received address and information on the external electronic device 201 (for example, identification information).

In operation 511, the external electronic device 201 may transmit the ranging response message to the electronic device 101.

In operation 513, the electronic device 101 may receive the ranging response message from the external electronic device 201 and measure the distance between the electronic device 101 and the external electronic device 201, based on information included in the received ranging response message.

In operation 515, the electronic device 101 may broadcast the ranging request message including the address (for example, the first address) selected from the addresses configured in the specified broadcast address pool at the next transmission time (second transmission time).

In operation 517, the external electronic device 201 may receive the ranging request message.

In operation 519, the external electronic device 201 may check whether the address included in the ranging request message is an address having a history of previous reception and identify that the address included in the ranging request message is the address having the history of previous reception. Accordingly, the external electronic device 201 may configure not to transmit the ranging response message.

According to various embodiments, the external electronic device 201 may transmit the ranging response message including result information of the update or reallocation of the broadcast address transmitted periodically or by event generation.

It has been described that the electronic device 101 is a tag device that is a requester initiating ranging in the operation procedure in FIGs. 4 and 5, but the electronic device 101 may be a node device that is a responder and the external electronic device 201 may be a tag device that is a requester. In this case, the electronic device 101 may identically perform the operations executed by the node device.

According to an embodiment, a method of operating an electronic device (for example, the electronic device 101 of FIGs. 1, 2A, and 2B) may include an operation of broadcasting a ranging request message comprising an address selected from a plurality of addresses configured in a specified broadcast address pool through a communication module of the electronic device using short-range wireless communication and an operation of receiving a ranging response message from at least one external electronic device to which an address selected using the specified broadcast address pool are allocated, and wherein the address allocated to the at least one external electronic device may correspond to the address included in the ranging request message.

According to an embodiment, the method may include an operation of measuring distance between the electronic device and the at least one external electronic device, based on the ranging response message, an operation of identifying degree of risk by the at least one external electronic device, based on the measured distance, and an operation of informing of dangerous situation, based on the identified degree of risk.

According to an embodiment, the operation of informing of the dangerous situation, based on the identified degree of risk may include an operation of displaying information for informing of dangerous situation, based on the identified degree of risk on a display of the electronic device

According to an embodiment, the operation of informing of the dangerous situations, based on the identified degrees of risk may include an operation of outputting information for informing of dangerous situation, based on the identified degree of risk through an audio module of the electronic device.

According to an embodiment, the ranging request message may be periodically broadcasted in a specified transmission time, and the short-range wireless communication may be ultra-wideband communication.

According to an embodiment, the operation of receiving the ranging response messages from the at least one external electronic device may include an operation of identifying using the specified broadcast address pool that a ranging response message is not received from another external electronic device to which an address that is different from the address included in the ranging request message.

According to an embodiment, the operation of broadcasting the ranging request message through the communication module of the electronic device using the short-range wireless communication may include an operation of setting a broadcast group comprising two or more addresses among the plurality of addresses included in the broadcast address pool and an operation of sequentially broadcasting two or more request messages comprising an address sequentially selected from the two or more addresses included in the broadcast group at specified broadcast time points in the transmission time.

According to an embodiment, the operation of receiving the ranging response message from the at least one external electronic device may include an operation of, in case that the address included in the ranging request message has a history of previous reception by the at least one external electronic device, identifying that the ranging response message is not received from the at least one external electronic device in a next transmission time.

According to an embodiment, the method may further include an operation of, in case that the electronic device receiving a ranging request message from the at least one external electronic device is a responder, allocating an address selected using the broadcast address pool, an operation of identifying ranging failure rate of the ranging response message transmitted to the at least one external electronic device in response to the ranging request message, an operation of, in case that the identified ranging failure rate is higher than or equal to a threshold value, reallocating another address by using the broadcast address pool, and an operation of receiving information related to address reallocation according to ranging failure rate identified by other anonymous external electronic device located in an adjacent area from the other external electronic devices.

According to an embodiment, a non-transitory storage medium storing programs having executable instructions that, when executed by a processor of an electronic device, cause the electronic device to broadcast a ranging request message comprising address selected from a plurality of addresses configured in a specified broadcast address pool through a communication module of the electronic device using short-range wireless communication and receive a ranging response message from at least one external electronic device to which an address selected using the specified broadcast address pool is allocated, and wherein the address allocated to the at least one external electronic device may correspond to the address included in the ranging request message.

Embodiments disclosed in this document are presented for explanation and understanding of the disclosed technology, and do not limit the scope of the technology disclosed in this document. Accordingly, the scope of this document should be construed to include all modifications based on the technical idea of this document or various other embodiments.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a communication module (190);
memory (130); and
at least one processor (120) electrically connected to the communication module and the memory,
wherein the at least one processor is configured to:
control the communication module to broadcast a ranging request message comprising an address selected from a plurality of addresses configured in a specified broadcast address pool through short-range wireless communication; and
receive a ranging response message from at least one external electronic device (201) to which an address selected using the specified broadcast address pool is allocated, and
wherein the address allocated to the at least one external electronic device correspond to the address included in the ranging request message.

2. The electronic device of claim 1, wherein the at least one processor is configured to:
measure distance between the electronic device and the at least one external electronic device, based on the ranging response message;
identify degree of risk by the at least one external electronic device, based on the measured distance; and
inform of dangerous situation, based on the identified degree of risk.

3. The electronic device of claim 2 or 3, further comprising:
a display module electrically connected to the at least one processor; and
an audio module (170) electrically connected to the at least one processor,
wherein the at least one processor is configured to:
control the display module to display information for informing of the dangerous situation, based on the identified degree of risk;
control the audio module to output information for informing of the dangerous situation, based on the identified degree of risk; and
periodically broadcast the ranging request message at a specified transmission time, and
wherein the short-range wireless communication is ultra-wideband communication.

4. The electronic device of one of claims 1 to 3, wherein the at least one processor is configured to:
set a broadcast group comprising two or more addresses among the plurality of addresses included in the broadcast address pool; and
sequentially broadcast two or more request messages comprising address sequentially selected from the two or more addresses included in the broadcast group at specified broadcast time point in the transmission time.

5. The electronic device of one of claims 1 to 4, wherein the at least one processor is configured to, in case that the address included in the ranging request message has a history of previous reception by the at least one external electronic device, identify that the ranging response message is not received from the at least one external electronic device in a next transmission time.

6. The electronic device of one of claims 1 to 5, wherein the at least one processor is configured to, in case that the at least one external electronic device reallocates the address periodically or according to event generation, receive information related to address reallocation from the at least one external electronic device.

7. The electronic device of one of claims 1 to 6, wherein the at least one processor is configured to:
in case that the electronic device receiving a ranging request message from the at least one external electronic device is a responder, allocate an address selected using the broadcast address pool;
identify ranging failure rate of a ranging response message transmitted to the at least one external electronic device in response to the ranging request message;
in case that the identified ranging failure rate is higher than or equal to a threshold value, reallocate other address by using the broadcast address pool; and
receive information related to address reallocation according to ranging failure rate identified by other anonymous external electronic device located in adjacent area from the other external electronic device.

8. A method of operating an electronic device (101), the method comprising:
broadcasting a ranging request message comprising an address selected from a plurality of addresses configured in a specified broadcast address pool through a communication module (190) of the electronic device using short-range wireless communication; and
receiving a ranging response message from at least one external electronic device (201) to which an address selected using the specified broadcast address pool are allocated,
wherein the address allocated to the at least one external electronic device correspond to the address included in the ranging request message.

9. The method of claim 8, wherein the method comprises:
measuring distance between the electronic device and the at least one external electronic device, based on the ranging response message;
identifying degree of risk by the at least one external electronic device, based on the measured distance; and
informing of dangerous situation, based on the identified degree of risk.

10. The method of claim 8 or 9, wherein the informing of the dangerous situations, based on the identified degrees of risk, comprises:
displaying information for informing of the dangerous situation, based on the identified degree of risk on a display of the electronic device; and
outputting information for informing of the dangerous situation, based on the identified degree of risk through an audio module (170) of the electronic device.

11. The method of one of claims 8 to 10, wherein the ranging request message is periodically broadcasted in a specified transmission time, and the short-range wireless communication is ultra-wideband communication.

12. The method of one of claims 8 to 11, wherein the receiving of the ranging response message from the at least one external electronic device (201) comprises identifying using the specified broadcast address pool that a ranging response message is not received from another external electronic device to which an address that is different from the address included in the ranging request message is allocated.

13. The method of one of claims 8 to 11, wherein the broadcasting of the ranging request message through the communication module of the electronic device using the short-range wireless communication comprises:
setting a broadcast group comprising two or more addresses among the plurality of addresses included in the broadcast address pool; and
sequentially broadcasting two or more request messages comprising an address sequentially selected from the two or more addresses included in the broadcast group at specified broadcast time points in the transmission time, and
wherein the receiving of the ranging response message from the at least one external electronic device comprises, in case that the addresses included in the ranging request message has a history of previous reception by the at least one external electronic device, identifying that the ranging response message is not received from the at least one external electronic device in a next transmission time.

14. The method of one of claims 8 to 11, further comprising:
in case that the electronic device receiving a ranging request message from the at least one external electronic device is a responder, allocating an address selected using the broadcast address pool;
identifying ranging failure rate of a ranging response message transmitted to the at least one external electronic device in response to the ranging request message;
in case that the identified ranging failure rate is higher than or equal to a threshold value, reallocating another address by using the broadcast address pool; and
receiving information related to address reallocation according to ranging failure rate identified by other anonymous external electronic device located in adjacent area from the other external electronic device.

15. A non-transitory storage medium storing programs comprising executable instructions that, when executed by a processor (120) of an electronic device (101), cause the electronic device to:
broadcast a ranging request message comprising an address selected from a plurality of addresses configured in a specified broadcast address pool through a communication module (190) of the electronic device using short-range wireless communication; and
receive ranging response message from at least one external electronic device (201) to which an address selected using the specified broadcast address pool are allocated,
wherein the address allocated to the at least one external electronic device correspond to the address included in the ranging request message.
